# DEMANDE DE BREVET EUROPEEN

(11) **EP 2 808 570 A1**
(43) Date de publication de la demande: **03.12.2014**
(21) Numéro de dépôt: 14170525.1
(22) Date de dépôt: 30.05.2014
(51) Int. Cl.: F16C 33/78

(54) **Roulement muni d'un système d'étanchéité**

(30) Priorité: 31.05.2013 FR 1355020
(71) Demandeur: NTN-SNR Roulements, 74000 Annecy (FR)
(72) Inventeur: Pollier, Vivien, 74370 PRINGY (FR)
(74) Mandataire: Derambure Conseil

(57) **Abrégé**

Le roulement comprend une pièce d'étanchéité comportant un corps d'étanchéité (26) annulaire d'axe l'axe du roulement. Le corps d'étanchéité (26) comprend une portion radialement intérieure d'étanchéité (27) avec une première surface périphérique d'étanchéité (28) continue en contact périphérique continu glissant avec une surface complémentaire de la bague intérieure (5) du roulement, et une portion radialement extérieure d'étanchéité (29) avec une deuxième surface périphérique d'étanchéité (30) continue en contact périphérique continu glissant avec une surface complémentaire de la bague extérieure du roulement,

La pièce d'étanchéité comprend au moins un organe de fixation (31) prévu sur le corps d'étanchéité (26) annulaire, et fixé mécaniquement à une cage (13) du roulement. L'organe de fixation (31) s'étend au moins partiellement dans une région dédiée de l'espace intérieur annulaire (E) du roulement, et une couronne latérale annulaire (15) de la cage (13) comporte une face cylindrique (22) tournée vers l'intérieur et faisant face à la surface complémentaire (11) de la bague intérieure (5), à faible distance de celle-ci, de manière à assurer un guidage de la cage (13) par rapport à la bague intérieure (5).

## Description

L'invention concerne le domaine des pièces et systèmes d'étanchéité pour roulements, et des roulements munis de tels pièces et systèmes.

Plus précisément, l'invention concerne le domaine des roulements étanches.

On connait de manière générale des roulements comprenant une bague intérieure et une bague extérieure définissant entre elles un espace intérieur annulaire, et des corps roulants disposés dans l'espace intérieur annulaire et retenus par une cage. Pour garantir le fonctionnement de tels roulements, on a recours à un joint d'étanchéité fermant l'espace intérieur annulaire au moins d'un côté. Une difficulté réside en ce que, en utilisation, l'une des bagues intérieure ou extérieure va tourner par rapport à l'autre. Aussi, pour garantir l'étanchéité, le joint doit garantir à la fois une étanchéité statique et une étanchéité dynamique.

Un exemple d'un tel système est par exemple décrit dans WO2011/138,107. Toutefois, la garantie d'une bonne étanchéité dynamique implique une forte proximité entre la surface périphérique d'étanchéité dynamique et la bague en regard, et limite par conséquent fortement le désalignement angulaire maximal entre les deux bagues. En cas de rotation rapide et/ou de léger désalignement, un frottement important va causer un couple résistant de forte intensité. Par ailleurs, la réalisation de l'étanchéité statique nécessite d'usiner un profil de fixation dans la bague concernée.

WO 2011/027,662 vise à réduire ces problèmes en proposant de coller un déflecteur sur la cage du roulement. Un déflecteur est une pièce d'étanchéité rigide, visant à empêcher l'entrée de corps de dimensions importantes. Grace à ces dispositions, on n'a plus besoin d'usiner une des bagues pour la rétention de la pièce d'étanchéité, et on double le désalignement angulaire autorisé, celui-ci étant pris en charge sur les deux bords périphériques du déflecteur.

Toutefois, un tel déflecteur ne fournit qu'une étanchéité à l'encontre de corps de dimensions importantes. Le problème à la base de l'invention est donc d'améliorer l'étanchéité d'un tel système.

Par ailleurs, dans le cas particulier d'une cage massive, on connait le document JP 2007/198540. Dans ce document, on assemble une pièce d'étanchéité à la cage par vissage. Une telle solution n'est pas satisfaisante du point de vue industriel, car elle nécessite un nombre de composants important.

Ainsi, un problème posé est également de simplifier la mise en oeuvre de la solution d'étanchéité.

FR 2 776 725 décrit un exemple de réalisation d'une pièce d'étanchéité assemblée sur une cage. Toutefois, dans ce document, le positionnement précis de la cage dans le roulement n'est pas garanti. Ceci a un impact direct sur l'étanchéité, car en cas de jeu de la cage par rapport aux bagues, le contact entre le joint et la bague pourrait être perdu, ce qui influerait temporairement sur l'étanchéité, et/ou le joint pourrait être détérioré, ce qui influerait définitivement sur l'étanchéité. Une même remarque peut être faite à propos de DE 83 333 75 U. On cherche donc une solution d'étanchéité fiable.

Ci-après, un exposé de l'invention.

Selon un aspect, l'invention a pour objet un roulement comprenant une bague intérieure définissant un axe de roulement, une bague extérieure, la bague intérieure et la bague extérieure définissant entre elles un espace intérieur annulaire, des corps roulants disposés dans l'espace intérieur annulaire, et un système d'étanchéité, le système d'étanchéité comprenant :
- une cage retenant les corps roulants, et comprenant au moins un motif de fixation,
- une pièce d'étanchéité.

La pièce d'étanchéité comprend un corps d'étanchéité annulaire d'axe l'axe de roulement.

Le corps d'étanchéité comprend une portion radialement intérieure d'étanchéité comprenant une première surface périphérique d'étanchéité continue en contact périphérique continu glissant avec une surface complémentaire de la bague intérieure, et une portion radialement extérieure d'étanchéité comprenant une deuxième surface périphérique d'étanchéité continue en contact périphérique continu glissant avec une surface complémentaire de la bague extérieure.

La pièce d'étanchéité comprend au moins un organe de fixation prévu sur le corps d'étanchéité annulaire, et fixé mécaniquement au motif de fixation de la cage.

Par fixation mécanique, on comprend toute interaction entre deux pièces par coopération de forme, faisant intervenir des efforts à l'échelle macroscopique, à l'opposé d'une fixation chimique, ou l'interaction a lieu à l'échelle moléculaire.

L'organe de fixation s'étend au moins partiellement dans une région dédiée de l'espace intérieur annulaire.

La deuxième couronne latérale annulaire de la cage comporte une face cylindrique tournée vers l'intérieur et faisant face à la surface complémentaire de la bague intérieure, à faible distance de celle-ci, de manière à assurer un guidage de la cage par rapport à la bague intérieure.

En prévoyant un organe de fixation de la pièce d'étanchéité à fixer mécaniquement à la cage, on s'affranchit des contraintes liées au collage, qui nécessite pour la pièce d'étanchéité d'être réalisée dans un matériau aux caractéristiques proches de celles du matériau de la cage, et dont la fiabilité dans le temps dans des conditions adverses est parfois difficilement maitrisée. Ainsi, on n'est plus limité à un déflecteur, et on ouvre le champ des réalisations possibles de la pièce d'étanchéité à des pièces offrant une meilleure étanchéité. Par ailleurs, la fixation peut être réalisée simplement par un simple mouvement relatif d'assemblage de la pièce d'étanchéité et de la cage l'une en direction de l'autre.

En définissant précisément la position de la cage par rapport à la bague intérieure, on définit précisément la position de la pièce d'étanchéité portée par celle-ci par rapport à la bague intérieure. Ceci permet de définir au mieux la solution d'étanchéité.

Selon une réalisation, l'organe de fixation de la pièce d'étanchéité comprend une saillie projetant du corps d'étanchéité selon l'axe de roulement.

Selon une réalisation, la saillie comprend une pluralité de pieds séparés répartis circonférentiellement.

Selon une réalisation, l'organe de fixation de la pièce d'étanchéité est un organe de fixation à déformation élastique destiné à être fixé à la cage par déformation élastique.

Selon une réalisation, l'organe de fixation comprend une base, et un ergot de fixation lié élastiquement à la base.

Selon une réalisation, l'ergot de fixation comprend une surface de rétention normale à un axe longitudinal de la partie déformable élastiquement.

Selon une réalisation, l'organe de fixation comprend une partie déformable élastiquement par rapport à la base, et dans laquelle l'ergot de fixation est porté par la partie déformable élastiquement.

Selon une réalisation, l'ergot de fixation est réalisé en élastomère déformable.

Selon une réalisation, au moins les portions radialement intérieure et extérieure d'étanchéité du corps d'étanchéité de la pièce d'étanchéité sont en matériau élastomère.

Selon une réalisation, la pièce d'étanchéité présente un organe support, et un corps élastomère de la pièce d'étanchéité comprenant un joint d'étanchéité est surmoulé sur l'organe support, le corps élastomère et l'organe support ensemble formant le corps d'étanchéité.

Selon une réalisation, l'organe de fixation s'étend de l'organe support.

Selon une réalisation, l'organe de fixation s'étend du corps élastomère.

Selon une réalisation, l'organe support comprend une couronne annulaire comprenant un pourtour radialement intérieur et un pourtour radialement extérieur tous deux compris entre les première et deuxième surfaces d'étanchéité.

Selon une réalisation, la première surface périphérique d'étanchéité et/ou la deuxième surface périphérique d'étanchéité de la pièce d'étanchéité comprend au moins une lèvre, au moins deux lèvres, une lèvre ou deux lèvres destinée à être en regard de la surface complémentaire associée.

Selon une réalisation, la cage du système d'étanchéité comprend la couronne latérale annulaire formant une butée pour des corps roulants du roulement selon une direction axiale, et des ponts s'étendant depuis la couronne latérale annulaire et définissant deux à deux entre eux un logement de corps roulant, et dans lequel le motif de fixation de la cage est prévu sur la couronne latérale annulaire.

Selon une réalisation, le motif de fixation de la cage comprend au moins une ouverture traversante ménagée dans la couronne latérale annulaire entre une surface extérieure et une surface intérieure, et l'organe de fixation comprend une base disposée côté surface extérieure, une partie déformable élastiquement lorsqu'elle est passée à travers l'ouverture traversante, et un ergot porté par la partie déformable élastiquement et coopérant avec la surface intérieure de la couronne latérale annulaire pour maintenir la pièce d'étanchéité sur la cage.

Selon une réalisation, la cage est massive.

Selon une réalisation, la cage comprend une couronne latérale annulaire, la couronne latérale annulaire comprenant une surface intérieure et une surface extérieure opposées, la surface intérieure définissant une butée pour une surface de butée des corps roulants du roulement selon une direction axiale du corps roulant, le corps d'étanchéité étant prévu du côté de la surface extérieure de la couronne latérale annulaire, l'organe de fixation s'étendant depuis le corps d'étanchéité, à travers la couronne latérale annulaire, jusqu'à une portion de tête du côté de la surface intérieure.

La surface de butée des corps roulants présentant un évidement accommodant la portion de tête de l'organe de fixation.

Selon une réalisation, l'évidement présente la forme d'un disque d'axe l'axe du corps roulant.

Selon une réalisation, la région dédiée accueillant la portion de l'organe de fixation s'étend entre deux corps roulants adjacents.

On décrit maintenant brièvement les figures des dessins.
La figure 1 est un schéma correspondant à une coupe transversale d'une partie d'un roulement dans un plan contenant l'axe du roulement, selon un premier mode de réalisation.
Les figures 1a et 1b sont des agrandissements de parties de la figure 1.
La figure 2 est une vue de face de la pièce d'étanchéité de la figure 1.
La figure 3 est une vue similaire à la figure 1 pour un deuxième mode de réalisation.
La figure 3a est un agrandissement d'une partie de la figure 3.
La figure 4 est une vue similaire à la figure 1 pour un troisième mode de réalisation.
La figure 4a est un agrandissement d'une partie de la figure 4.
La figure 5 est une vue en perspective d'une cage pour un mode de réalisation similaire au premier mode de réalisation.
La figure 6 est une vue similaire à la figure 1 pour un quatrième mode de réalisation.
La figure 6a est une vue partielle en perspective élargie de la figure 6.

Ci-après un exposé détaillé de plusieurs modes de réalisation de l'invention assorti d'exemples et de référence aux dessins.

Un système tournant 1 comprend classiquement un arbre 2 s'étendant axialement selon un axe AA, et un boîtier extérieur 3 recevant l'arbre 2. Le système tournant est assemblé de sorte à permettre un mouvement relatif de rotation de l'arbre 2 et du boîtier extérieur 3 autour de l'axe AA de l'arbre. Un tel mouvement relatif de rotation peut par exemple être la rotation de l'arbre 2 autour de son axe AA par rapport au boîtier extérieur 3 fixe, ou un mouvement de rotation du boîtier extérieur 3 autour de l'arbre 2 fixe. Pour fixer les idées, on se référera par la suite au premier de ces deux cas, étant entendu que l'invention s'applique aussi bien à l'autre cas.

Par exemple, l'arbre 2 est un essieu ou une partie d'un essieu, et le boitier extérieur 3 est un carter d'essieu. Toutefois, de nombreuses autres applications sont possibles.

Le terme « axial » se réfère à ce qui s'étend selon l'axe AA. Le terme « radial » se réfère conventionnellement à ce qui s'étend depuis l'axe AA en étant sensiblement perpendiculaire (y compris perpendiculaire) à l'axe AA.

Le système tournant 1 peut également comporter un roulement 4. Le roulement 4 est interposé entre l'arbre 2 et le boîtier extérieur 3. Le roulement 4, d'axe AA, comprend une bague intérieure 5, une bague extérieure 6 et, dans un espace E entre les deux bagues 5 et 6, un agencement à corps roulants 7 incluant des corps roulants 8. La bague extérieure 6 est par exemple formée d'une pièce monobloc en acier et comporte un chemin de roulement 9 unique sphérique, c'est-à-dire dont la surface se trouve sur une sphère centrée au centre de symétrie de la bague. La bague intérieure 5 peut également être monobloc et comporte deux chemins de roulement 10 faisant face au chemin de roulement 9 de la bague extérieure 2.

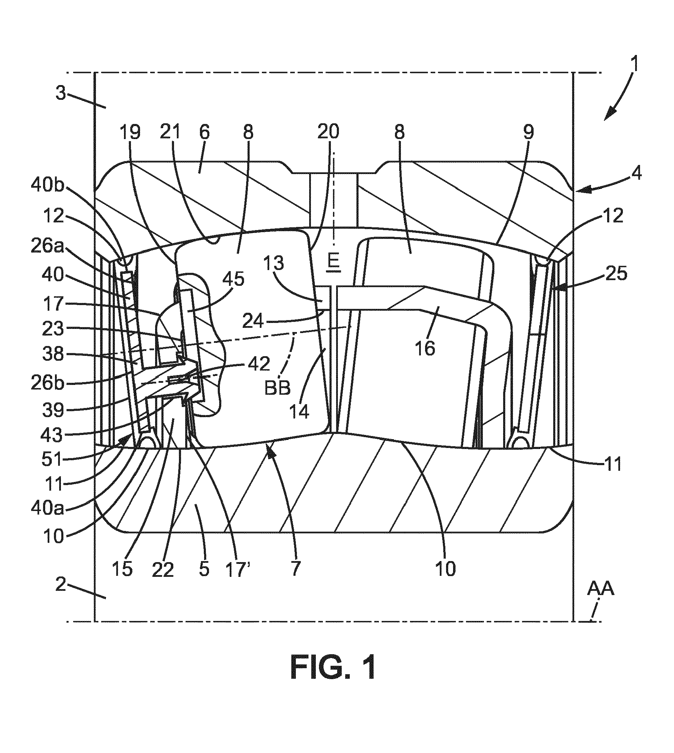

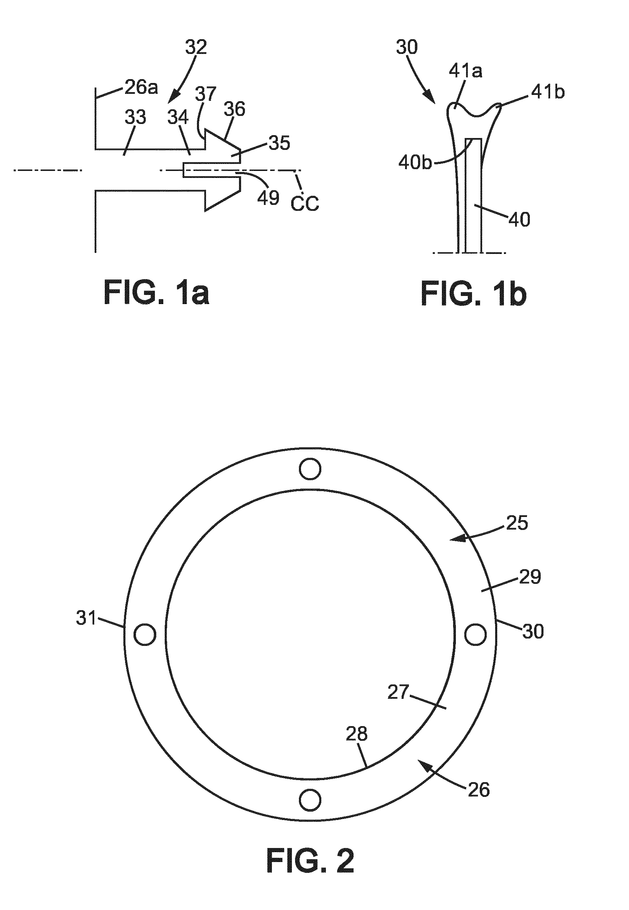

Chacun de ces deux chemins de roulement 10 forme une surface de révolution dont la génératrice dans le plan de la figure 1 est un arc de cercle ayant un rayon égal au rayon de courbure du chemin de roulement 9 de la bague extérieure 6.

La bague intérieure 5 comporte en outre, à chaque extrémité axiale, un rebord 11 tourné radialement vers la bague extérieure 6 et prolongeant le chemin de roulement 10.

La bague extérieure 6 comporte en outre, à chaque extrémité axiale, un rebord 12 tourné radialement vers la bague intérieure 5 et prolongeant le chemin de roulement 9.

La bague intérieure 5 est montée rigidement calée sur l'arbre 2 et/ou la bague extérieure 6 est montée rigidement calée dans le boîtier extérieur 3.

Selon les réalisations, l'agencement à corps roulants 7 comporte soit une seule rangée de N corps roulants 8, soit deux rangées de corps roulants 8, comme représenté. Par la suite, on fera référence à ce dernier mode de réalisation. Les corps roulants 8 d'une même rangée sont maintenus par une cage 13. Les corps roulants sont par exemple des tonneaux d'axe BB.

Les bagues 5 et 6 et l'agencement à corps roulants 7, et par voie de conséquence le roulement 4, peuvent faire l'objet de différentes variantes de réalisation.

Les deux cages 13 peuvent être réalisées identiques. Elles peuvent être notamment fabriquées en tôle métallique formée par un procédé d'emboutissage. Dans le présent exemple de réalisation, elles sont disposées symétriques l'une par rapport à l'autre par rapport à un plan normal à l'axe du roulement 1. Les cages sont indépendantes en rotation l'une par rapport à l'autre. Dans l'exemple représenté, elles sont décalées angulairement l'une par rapport à l'autre autour de l'axe AA, par exemple d'un écart angulaire de l'ordre de la moitié de la plage angulaire associée à un corps roulant 8. Mais cela peut être autrement. Rien ne maintient un tel décalage angulaire.

Chaque cage 13 définit un axe de révolution confondu avec l'axe de révolution de la bague intérieure 5, et comporte une première couronne latérale annulaire 14 axialement intérieure, une deuxième couronne latérale annulaire 15 axialement extérieure, et des ponts 16 s'étendant d'une couronne latérale annulaire 14, 15 à l'autre 15, 14. Les termes 'axialement intérieure' et 'axialement extérieure' sont ici purement illustratifs, et font référence à la position des couronnes latérales annulaires le long de l'axe AA, par rapport à une région centrale du roulement.

La deuxième couronne latérale annulaire 15 axialement extérieure a une face périphérique extérieure 17 et une face périphérique intérieure 17' opposée. La première couronne latérale annulaire 14 a une face périphérique extérieure 18 et une face périphérique intérieure 18' opposée.

Les ponts 16 sont obtenus par découpe de fenêtres dans la tôle formant la cage 13, ces fenêtres (ou espaces ouverts) formant des alvéoles dans lesquelles sont logés les corps roulants 8.

Les corps roulants 8 sont conformés en tonneaux d'axe BB, avec deux faces planes d'extrémité 19, 20 et une surface de roulement convexe 21 engendrée par une génératrice constituée par un arc de cercle de rayon analogue au rayon de courbure du chemin de roulement sphérique 9, 10.

Cette description est faite pour ce mode de réalisation, mais on pourra en variante prévoir d'autres types de corps roulants, tel qu'en particulier des cylindres ou troncs de cônes évasés. Ainsi, selon les réalisations, l'axe BB d'un corps roulant 8 est parallèle ou incliné par rapport à l'axe AA du roulement 4.

La deuxième couronne latérale annulaire 15 assure un guidage de la cage 13 par rapport à la bague intérieure 5. Elle comporte une face cylindrique 22 tournée vers l'intérieur et faisant face au rebord 11 de la bague intérieure 5, à faible distance de celui-ci, de manière à assurer un guidage de la cage 13 par rapport à la bague intérieure 5. Ainsi, en fonctionnement, la cage 13 est centrée sur la bague intérieure 5, par coopération mécanique de portions rigides entre elles, de sorte que sa position est à tout moment précisément définie.

La deuxième couronne latérale annulaire 15 forme, au niveau des alvéoles, des facettes de contact 23 essentiellement perpendiculaires à l'axe de rotation des corps roulants 8, assurant un guidage des faces planes d'extrémité 19 des corps roulants 8.

De même, la première couronne latérale annulaire 14 forme au niveau des alvéoles des facettes de contact 24 essentiellement perpendiculaires à l'axe de rotation des corps roulants 8, assurant un guidage des faces planes d'extrémité 20 des corps roulants 8.

On prévoit une pièce d'étanchéité 25 à chaque extrémité axiale du roulement 4. Pour simplifier, une seule pièce d'étanchéité 25 va être décrite, étant entendu que l'autre pièce d'étanchéité peut être réalisée identique ou similaire, symétrique de la première par rapport à un plan normal à l'axe AA.

En variante, on pourrait utiliser une seule pièce d'étanchéité 25 telle que celle décrite par la suite en une extrémité axiale, et toute autre solution d'étanchéité pour l'autre extrémité axiale.

La pièce d'étanchéité 25 comprend un corps d'étanchéité 26 annulaire d'axe AA. Le corps d'étanchéité 26 comprend une portion radialement intérieure d'étanchéité 27 comprenant une première surface périphérique d'étanchéité 28 continue en contact périphérique continu glissant avec le rebord 11 de la bague intérieure 5, qui forme une surface complémentaire de la bague intérieure. Le corps d'étanchéité 26 comprend une portion radialement extérieure d'étanchéité 29 comprenant une deuxième surface périphérique d'étanchéité 30 continue en contact périphérique continu glissant avec le rebord 12 de la bague extérieure 6, qui forme une surface complémentaire de la bague extérieure.

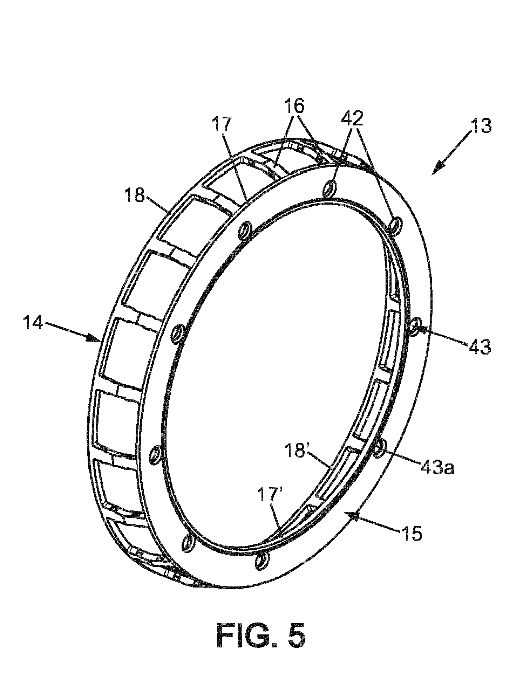

La pièce d'étanchéité 25 comprend au moins un organe de fixation 31 prévu sur le corps d'étanchéité 26 annulaire, et fixé mécaniquement à la cage 13. Dans l'exemple présenté, le corps d'étanchéité 26 comprend quatre organes de fixation 31 équi-réparties selon la circonférence de la pièce d'étanchéité 25. En variante, on pourra utiliser 1 organe de fixation 31, même si la rétention sera améliorée à partir de 2, et en particulier de 3 organes de fixation 31. En variante, on utilise un organe de fixation 31 associé à chaque paire d'alvéoles de la cage 13 (cas de la figure 5), ou un organe de fixation 31 associé à chaque alvéole de la cage 13 (c'est-à-dire alors en nombre identique au nombre de corps roulants 8 d'une rangée de corps roulants).

Ci-après, on décrit un exemple d'organe de fixation 31, sachant que tous les organes de fixation peuvent être réalisés identiques.

Le corps d'étanchéité 26 comprend une face axialement interne 26a tournée vers la cage 13, et une face axialement externe 26b, tournée vers l'extérieur, opposée à la face axialement interne 26a.

L'organe de fixation 31 comprend une saillie 32 projetant de la face axialement interne 26a du corps d'étanchéité selon l'axe de roulement. Ici, la saillie comprend une pluralité de pieds individuels séparés répartis circonférentiellement. On pourrait toutefois prévoir en variante une saillie ayant une étendue circonférentielle importante sur tout ou partie de la circonférence du corps d'étanchéité 26 annulaire. Une étendue circonférentielle importante s'entend d'une étendue couvrant au moins une alvéole de la cage 13.

L'organe de fixation 31 est un organe de fixation à déformation élastique fixé à la cage 13 par déformation élastique. Dans le présent exemple, on a par exemple recours à un système clipsable.

En particulier, l'organe de fixation 31 comprend une base 33, une partie déformable élastiquement 34 par rapport à la base 33, et un ergot de fixation 35 porté par la partie déformable élastiquement 34. La partie déformable élastiquement 34 s'étend selon un axe d'introduction CC, et peut fléchir par rapport à cet axe. L'ergot 35 comporte une surface d'actionnement 36, sous forme de rampe inclinée par rapport à l'axe CC, et une surface de rétention 37 normale à l'axe CC.

Ces dispositions peuvent être répétées un certain nombre de fois, par exemple 2, 3 ou 4 fois, le long de la circonférence de la base 33. Ainsi, dans l'exemple présenté, on a recours à deux fois ces dispositions, de part et d'autre de l'axe CC. On réalise ainsi une fente 49 entre les parties déformables élastiquement 34.

La pièce d'étanchéité 25 présente un organe support 38 duquel s'étend l'organe de fixation 31. Un corps élastomère 51 est sur moulé sur l'organe support 38. Le corps élastomère 51 comprend un joint d'étanchéité 39. L'organe support 38 et l'organe de fixation 31 sont réalisés sous la forme d'un composant unique, par exemple par moulage. Le joint d'étanchéité 39 comporte les première et deuxième surfaces d'étanchéité 29 et 30. Les portions radialement intérieure et extérieure d'étanchéité du corps d'étanchéité sont en matériau élastomère. L'organe support 38 comprend une couronne annulaire 40 comprenant un pourtour radialement intérieur 40a et un pourtour radialement extérieur 40b tous deux compris entre les première et deuxième surfaces d'étanchéité 29 et 30.

En variante, on pourrait avoir recours à deux surmoulages distincts, l'un du pourtour radialement intérieur 40a, l'autre du pourtour radialement extérieur 40b. Les deux parties surmoulées ne sont pas nécessairement liées ou en contact.

Dans l'exemple présenté, la deuxième surface périphérique d'étanchéité 30 comprend une lèvre axialement extérieure 41a et une lèvre axialement intérieure 41b décalée l'une de l'autre selon la direction axiale. En variante, la deuxième surface périphérique d'étanchéité 30 pourrait ne comprendre qu'une seule lèvre, ou plus de deux lèvres. Ceci s'applique également, et indépendamment, à la première surface périphérique d'étanchéité 28. Les lèvres sont en regard chacune de la surface complémentaire associée.

Pour chaque organe de fixation 31, la cage 13 présente un motif de fixation 42 complémentaire de l'organe de fixation 31. Le motif de fixation est de géométrie adapté à la rétention de la pièce d'étanchéité 25 sur la cage 13. Pour l'exemple présenté ici, on a par exemple recours, à titre de motif de fixation 42, à une ouverture traversante 43 formée dans la cage, d'axe CC, de diamètre supérieur au diamètre de la base 33 et inférieur au diamètre de l'ergot 35. Les ouvertures traversantes 43 sont par exemple ménagées dans la deuxième couronne latérale annulaire axialement extérieure 15.

Pour assembler la pièce d'étanchéité 25 à la cage 13, on déplace la pièce d'étanchéité relativement à la cage 13 selon l'axe AA, en prenant soin de faire correspondre les organes de fixation 31 aux motifs de fixation 42 de la cage. Lors de la poursuite de ce déplacement, la surface d'actionnement 36, sous forme de rampe, coopère avec la surface interne 43a de l'ouverture traversante 43, et défléchit la partie déformable élastiquement 34. Une fois que l'ergot 35 a traversé l'ouverture traversante 43, la partie déformable élastiquement 34 est libre de reprendre sa position de repos, dans laquelle la surface de rétention 37 de l'ergot 35 coopère avec la face 17' intérieure de la cage 13, et empêche un déplacement dans le sens opposé de la pièce d'étanchéité 25 par rapport à la cage 13. Le déplacement axialement vers l'intérieur est, lui, empêché par butée de la surface axialement intérieure de la pièce d'étanchéité 25 sur la surface 17 extérieure de la cage 13. La cage 13 assemblée à la pièce d'étanchéité 25 forment ensemble un système d'étanchéité.

Dans cette position assemblée, si la cage 13 est en place dans le roulement 4, les première 28 et deuxième 30 surfaces d'étanchéité sont en contact étanche avec les rebords 11, 12, respectifs, des bagues interne 5 et externe 6.

Comme on peut le voir dans ce mode de réalisation, la portion de tête de l'organe de fixation 31 comprenant l'ergot 25 projette sensiblement au-delà de la surface axialement interne 17' de la cage. Si cet ergot 25 est prévu dans une alvéole recevant un corps roulant 8, on peut prévoir de ménager, dans la face plane d'extrémité 19 des corps roulants 8, un évidement 45 accommodant la portion de tête de l'organe de fixation 31. L'évidement 45 peut présenter la forme d'un disque d'axe BB. En variante, la portion de tête de l'organe de fixation 31 peut s'étendre entre deux corps roulants adjacents dans l'espace E. L'évidement 45 ou la partie de l'espace E entre deux corps roulants adjacents, selon le cas, recevant la portion de tête de l'organe de fixation 31, forme une portion dédiée de l'espace E.

Lorsque le roulement 4 va fonctionner, les bagues intérieure et extérieure vont tourner l'une par rapport à l'autre autour de l'axe AA selon une vitesse de rotation relative v. L'assemblage de la cage 13 et de la pièce d'étanchéité 25 va tourner autour de l'axe AA à une vitesse de rotation sensiblement de l'ordre de v/2. Il en résulte un contact périphérique continu glissant entre la première surface périphérique d'étanchéité 28 et le rebord 11 de la bague intérieure 5, et un contact périphérique continu glissant entre la deuxième surface périphérique d'étanchéité 30 et le rebord 12 de la bague extérieure 6. La vitesse de ces deux contacts étant réduite, l'étanchéité y est bien assurée.

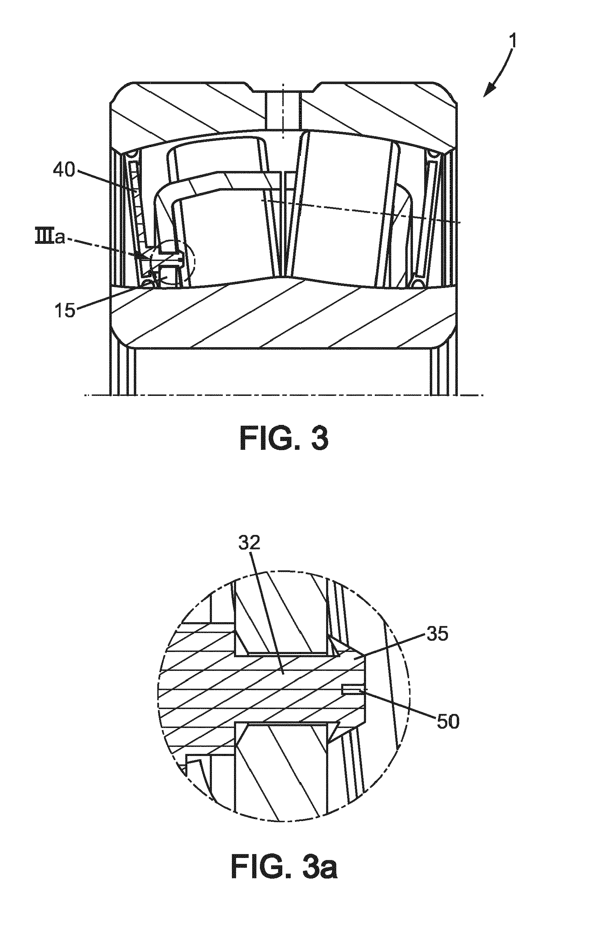

Les figures 3a et 3a représentent un deuxième mode de réalisation de l'invention. Dans cette variante de réalisation, on retrouve une partie des caractéristiques du premier mode de réalisation. Une différence tient en l'emplacement des saillies 32, qui sont ici disposées au niveau d'un interstice entre deux corps roulants 8 adjacents. Ici, l'évidement 45 peut n'être pas nécessaire. Une autre différence tient en la réalisation de la saillie, qui ne comprend pas ici une partie déformable élastiquement qui fléchit et porte un ergot. Un évidement 50 est prévu dans l'ergot, au niveau de son extrémité axiale intérieure, et la fixation de la saillie 32 sur la cage 13 se fait en force, par compression momentanée de matière, compression autorisée par la présence de l'évidement 50.

Par ailleurs, dans cette variante, l'ergot 35 ne comprend pas une surface de rétention 37 normale à l'axe AA, mais une forme de crantage en harpon augmentant sa rétention.

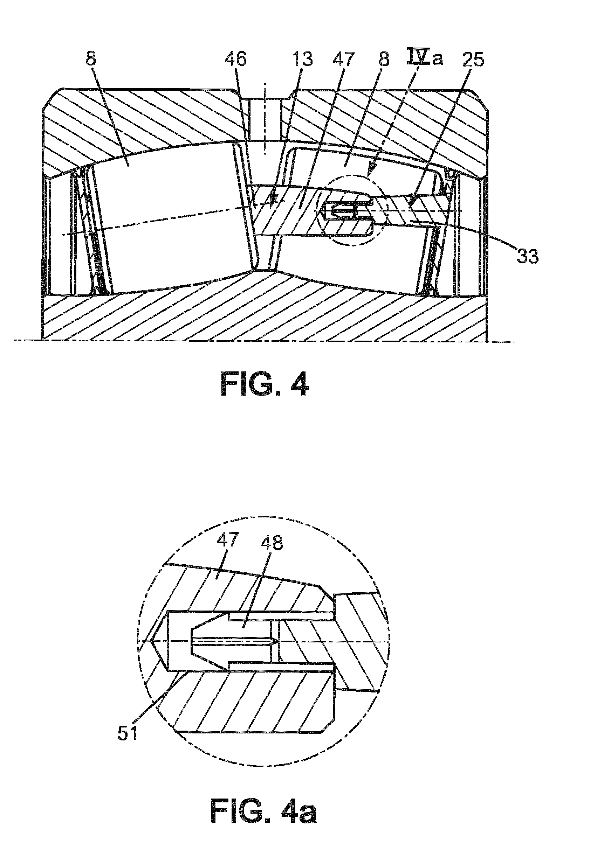

Les figures 4 et 4a illustrent désormais un autre mode de réalisation de l'invention. Ce mode de réalisation peut par exemple être utilisé pour les cages massives, formées par un procédé de fonte. Dans l'exemple de réalisation donné ici, on a recours à une cage 13 unique recevant les deux rangées de corps roulant 8. La cage 13 comprend un anneau central 46 duquel s'étendent des bras 47 en direction de chacune des extrémités axiales de la cage, de part et d'autre de l'anneau central 46 (seulement un des deux bras 47 est visible sur la figure 4, car l'ensemble des bras latéraux s'étendant depuis l'anneau central 46 dans un premier sens est décalé angulairement par rapport à celui s'étendant dans le deuxième sens de l'étendue angulaire d'un demi-logement de corps roulant 8).

Dans l'exemple de réalisation présenté ici, la pièce d'étanchéité 25 est assemblée à la cage 13 par press-fit. La saillie 32 comprend un corps 33 qui forme une partie de la cage 13, c'est-à-dire que le corps 33 forme une surface de butée latérale pour les corps roulants 8 disposés de part et d'autre de lui. La saillie 32 comprend une tête de fixation 48 s'étendant depuis le corps 33, et de géométrie similaire à celle du premier mode de réalisation. Le bras 47 comprend un évidement cylindrique de réception axial 51 de diamètre inférieur au diamètre de l'ergot 35. A la différence de l'ouverture traversante 43 du premier mode de réalisation, l'évidement cylindrique de réception axial 51 est borgne. La paroi cylindrique déforme élastiquement les parties déformables élastiquement 34, et la rétention est faite par friction, la force de rétention étant liée à la force importante normale appliquée par la partie déformable élastiquement 34 déformée élastiquement.

Dans les modes de réalisation ci-dessus, on prévoit un assemblage indissociable entre la pièce d'étanchéité 25 et la cage 13.

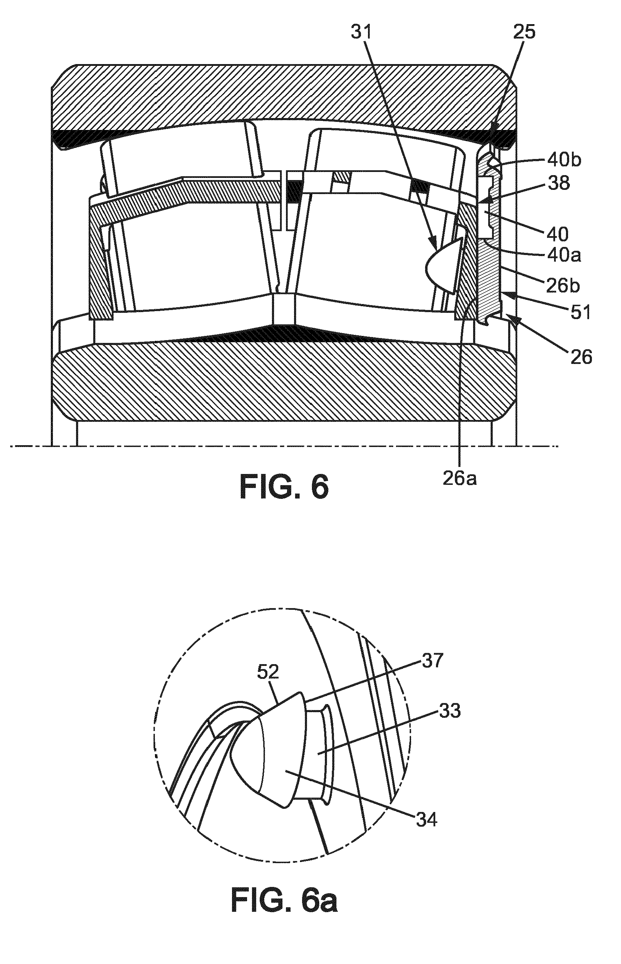

En variante, on pourrait prévoir un montage dissociable entre la pièce d'étanchéité 25 et la cage 13. C'est-à-dire que les deux éléments peuvent être dissociés l'un de l'autre sans rupture mécanique. Un mode de réalisation de cette variante est présenté sur la figure 6.

La pièce d'étanchéité 25 présente un organe support 38, par exemple métallique, auquel est assemblé un corps élastomère 51. Le corps élastomère 51 comprend la portion formant joint d'étanchéité 39 telle que décrite dans le cadre du mode de réalisation ci-dessus. De plus, l'organe de fixation 31 s'étend ici depuis le corps élastomère 51, en étant réalisé intégral avec celui-ci. L'organe support 38 et le corps élastomère 51 sont réalisés sous la forme d'un composant unique, par exemple par moulage. L'organe support 38 peut prendre toute forme appropriée permettant d'obtenir la raideur souhaitée. Dans cet exemple, il comprend une couronne annulaire 40 comprenant un pourtour radialement intérieur 40a et un pourtour radialement extérieur 40b tous deux compris entre les première et deuxième surfaces d'étanchéité 29 et 30.

La pièce d'étanchéité 25 comprend au moins un organe de fixation 31 prévu sur le corps d'étanchéité 26 annulaire, et fixé mécaniquement à la cage 13. Ci-après, on décrit un exemple d'organe de fixation 31, sachant que tous les organes de fixation peuvent être réalisés identiques.

Le corps d'étanchéité 26 comprend une face axialement interne 26a tournée vers la cage 13, et une face axialement externe 26b, tournée vers l'extérieur, opposée à la face axialement interne 26a.

L'organe de fixation 31 comprend une saillie 32 projetant de la face axialement interne 26a du corps d'étanchéité selon l'axe de roulement.

L'organe de fixation 31 est un organe de fixation à déformation élastique fixé à la cage 13 par déformation élastique. Dans le présent exemple, on a par exemple recours à un système élastomère déformable.

En particulier, l'organe de fixation 31 comprend une base 33 et un ergot de fixation 35 porté par la base 33. L'organe de fixation 31 s'étend selon un axe d'introduction CC. L'ergot 35 comporte une surface de guidage 52, sous forme de rampe inclinée par rapport à l'axe d'introduction, et une surface de rétention 37 normale à celui-ci.

Pour assembler la pièce d'étanchéité 25 à la cage 13, on déplace la pièce d'étanchéité relativement à la cage 13 selon l'axe AA, en prenant soin de faire correspondre les organes de fixation 31 aux motifs de fixation 42 de la cage. Lors de la poursuite de ce déplacement, la surface de guidage 52, sous forme de rampe, coopère avec la surface interne 43a de l'ouverture traversante 43, et comprime l'ergot de fixation 35. Une fois que l'ergot 35 a traversé l'ouverture traversante 43, il est libre de reprendre sa position de repos, dans laquelle la surface de rétention 37 de l'ergot 35 coopère avec la face 17' intérieure de la cage 13, et empêche un déplacement dans le sens opposé de la pièce d'étanchéité 25 par rapport à la cage 13. Toutefois, en appliquant un effort de traction suffisant (n'intervenant pas dans les conditions normales d'utilisation du roulement), cet assemblage peut être désassemblé.

## Revendications

1. Roulement comprenant une bague intérieure (5), définissant un axe de roulement, une bague extérieure (6), la bague intérieure et la bague extérieure définissant entre elles un espace intérieur (E) annulaire, des corps roulants (8) disposés dans l'espace intérieur annulaire, et un système d'étanchéité, le système d'étanchéité comprenant :
- une cage (13) retenant les corps roulants, et comprenant au moins un motif de fixation (42),
- une pièce d'étanchéité comprenant un corps d'étanchéité (26) annulaire d'axe l'axe du roulement, le corps d'étanchéité (26) comprenant une portion radialement intérieure d'étanchéité (27) comprenant une première surface périphérique d'étanchéité (28) continue en contact périphérique continu glissant avec une surface complémentaire de la bague intérieure, et une portion radialement extérieure d'étanchéité (29) comprenant une deuxième surface périphérique d'étanchéité (30) continue en contact périphérique continu glissant avec une surface complémentaire de la bague extérieure,
la pièce d'étanchéité comprend au moins un organe de fixation (31) prévu sur le corps d'étanchéité (26) annulaire, et fixé mécaniquement au motif de fixation (42) de la cage, **caractérisé en ce que** l'organe de fixation (31) s'étendant au moins partiellement dans une région dédiée de l'espace intérieur annulaire (E),
et **en ce que** la deuxième couronne latérale annulaire (15) de la cage (13) comporte une face cylindrique (22) tournée vers l'intérieur et faisant face à la surface complémentaire (11) de la bague intérieure (5), à faible distance de celle-ci, de manière à assurer un guidage de la cage (13) par rapport à la bague intérieure (5).

2. Roulement selon la revendication 1, dans lequel l'organe de fixation (31) de la pièce d'étanchéité comprend une saillie (32) projetant du corps d'étanchéité (26) selon l'axe de roulement, dans lequel la saillie (32) comprend une pluralité de pieds séparés répartis circonférentiellement.

3. Roulement selon l'une des revendications 1 à 2, dans lequel l'organe de fixation (31) de la pièce d'étanchéité est un organe de fixation à déformation élastique destiné à être fixé à la cage par déformation élastique,
dans lequel l'organe de fixation (31) comprend une base (33), et un ergot de fixation (35) lié élastiquement à la base (33).

4. Roulement selon la revendication 3, dans lequel l'ergot de fixation (35) comprend une surface de rétention (37) normale à un axe longitudinal de la partie déformable élastiquement.

5. Roulement selon l'une des revendications 3 ou 4, dans lequel l'organe de fixation (31) comprend une partie déformable élastiquement (34) par rapport à la base (33), et dans laquelle l'ergot de fixation (35) est porté par la partie déformable élastiquement (34), ou dans lequel l'ergot de fixation (35) est réalisé en élastomère déformable.

6. Roulement selon l'une des revendications 1 à 5, dans lequel au moins les portions radialement intérieure et extérieure d'étanchéité (27,29) du corps d'étanchéité (26) de la pièce d'étanchéité sont en matériau élastomère.

7. Roulement selon l'une des revendications 1 à 6, dans lequel la pièce d'étanchéité présente un organe support (38), et dans lequel un corps élastomère (51) de la pièce d'étanchéité comprenant un joint d'étanchéité (39) est surmoulé sur l'organe support (38), le corps élastomère (51) et l'organe support (38) ensemble formant le corps d'étanchéité (26).

8. Roulement selon la revendication 7, dans lequel l'organe de fixation (31) s'étend de l'organe support (38) ou du corps élastomère (51).

9. Roulement selon l'une des revendications 7 à 8, dans laquelle l'organe support (38) comprend une couronne annulaire (40) comprenant un pourtour radialement intérieur (40b) et un pourtour radialement extérieur (40a) tous deux compris entre les première et deuxième surfaces d'étanchéité (28,30).

10. Roulement selon l'une des revendications 1 à 9, dans laquelle la première surface périphérique d'étanchéité (28) et/ou la deuxième surface périphérique d'étanchéité (30) de la pièce d'étanchéité comprend au moins une lèvre (41a,41b), au moins deux lèvres (41a,41b), une lèvre ou deux lèvres destinée à être en regard de la surface complémentaire associée.

11. Roulement selon la revendication 10, dans lequel la cage (13) du système d'étanchéité comprend la couronne latérale annulaire (15) formant une butée pour des corps roulants du roulement selon une direction axiale, et des ponts (16) s'étendant depuis la couronne latérale annulaire (15) et définissant deux à deux entre eux un logement de corps roulant, et dans lequel le motif de fixation (42) de la cage (13) est prévu sur la couronne latérale annulaire (15).

12. Roulement selon la revendication 10 ou 11, dans lequel le motif de fixation de la cage (42) comprend au moins une ouverture traversante (43) ménagée dans la couronne latérale annulaire (15) entre une surface extérieure (17) et une surface intérieure (17'), et dans lequel l'organe de fixation (31) comprend une base (33) disposée côté surface extérieure (17), une partie déformable élastiquement (34) lorsqu'elle est passée à travers l'ouverture traversante (43), et un ergot (35) porté par la partie déformable élastiquement (34) et coopérant avec la surface intérieure (17') de la couronne latérale annulaire (15) pour maintenir la pièce d'étanchéité (25) sur la cage (13).

13. Roulement selon l'une quelconque des revendications 1 à 12, dans lequel la cage (13) comprend la couronne latérale annulaire (15), la couronne latérale annulaire (15) comprenant une surface intérieure (17') et une surface extérieure (17) opposées, la surface intérieure (17') définissant une butée pour une surface de butée (19) des corps roulants (8) du roulement selon une direction axiale du corps roulant, le corps d'étanchéité (26) étant prévu du côté de la surface extérieure (17) de la couronne latérale annulaire (15), l'organe de fixation (31) s'étendant depuis le corps d'étanchéité (26), à travers la couronne latérale annulaire (15), jusqu'à une portion de tête du côté de la surface intérieure (17'),
La surface de butée des corps roulants (8) présentant un évidement (45) accommodant la portion de tête de l'organe de fixation (31).

14. Roulement selon l'une quelconque des revendications 1 à 13, dans lequel la région dédiée accueillant la portion de l'organe de fixation s'étend entre deux corps roulants (8) adjacents.
